# EUROPEAN PATENT APPLICATION

(11) **EP 3 609 005 A1**
(43) Date of publication of application: **12.02.2020**
(21) Application number: 18781433.0
(22) Date of filing: 30.03.2018
(51) Int. Cl.: H01M 4/88, H01M 8/10

(54) **METHOD FOR PRODUCING GAS DIFFUSION ELECTRODE SUBSTRATE, AND FUEL CELL**

(30) Priority: 03.04.2017 JP 2017073450
(71) Applicant: Toray Industries, Inc., Tokyo 103-8666 (JP)
(72) Inventor: SODE Katsuya, Otsu-shi Shiga 520-2141 (JP); WAKATABE Michio, Otsu-shi Shiga 520-2141 (JP); IWASAKI Yusuke, Otsu-shi Shiga 520-2141 (JP)
(74) Representative: Prüfer & Partner mbB Patentanwälte · Rechtsanwälte
(86) International application number: PCT/JP2018/013610
(87) International publication number: WO 2018/186293

(57) **Abstract**

The present invention provides a method for efficiently producing a gas diffusion electrode substrate having excellent adhesion property. This method is a method for producing a gas diffusion electrode substrate having a porous layer on at least one surface of an electroconductive porous substrate comprising the steps of a coating step wherein a coating solution containing electroconductive particles, a water-repellant material, a dispersion medium, and a surfactant is coated on the electroconductive porous substrate, a drying step wherein heating is conducted at a temperature lower than the temperature of first heat treatment step, the first heat treatment step wherein the heating is conducted at a temperature lower than the melting point of the water-repellant material, and a second heat treatment step wherein the heating is conducted at a temperature higher than the melting point of the water-repellant material, wherein the coating solution contains at least 0.09 part by weight and up to 0.27 part by weight of the water-repellant material in relation to 1 part by weight of the electroconductive particles, the first heat treatment step is conducted by heating for a time of 0.2 minute to 3.0 minutes, and the second heat treatment step is conducted by heating for a time of up to 2.9 minute.

## Description

### [Technical Field]

The present invention relates to a method for producing a gas diffusion electrode substrate adapted for use in a fuel cell, in particular, a solid polymer fuel cell. The present invention also relates to a fuel cell including such gas diffusion electrode substrate.

### [Background Art]

The structure of a solid polymer fuel cell wherein a fuel gas containing hydrogen is supplied to the anode and an oxidation gas containing oxygen is supplied to the cathode to obtain the electromotive force by the electrochemical reaction taking place on both electrodes is hereinafter described by referring to FIG.

1. The solid polymer fuel cell (1) is commonly constituted by laminating a separator (2), a gas diffusion electrode substrate (3), a catalyst layer (4), an electrolytic membrane (5), a catalyst layer (4), a gas diffusion electrode substrate (3), and a separator (2) in this order. This gas diffusion electrode substrate should have a high gas diffusibility for diffusing the gas supplied from the separator to the catalyst layer, a high drainage property for draining the water generated in the electrochemical reaction to the separator, and the high electroconductivity for collecting the electric current generated. Accordingly, a gas diffusion electrode substrate prepared by using an electroconductive porous substrate of carbon fiber or the like for the substrate and forming a porous layer on its surface has been widely used.

Such gas diffusion electrode substrate, however, has the problem that the catalyst layer and the porous layer needs to be adhered by pressure application to simultaneously realize the performance and the durability since the gas diffusion electrode substrate needs to correspond to the change in the thickness of the electrolytic membrane by the swelling and shrinkage of the electrolytic membrane during the power generation by the fuel cell, and that, in such a case, proportion of the water-repellant material that inhibits the adhesion is preferably low on the surface of the porous layer while certain proportion of the water-repellant material in the porous layer is necessary in view of the drainage property that is one of the reason for the provision of the porous layer.

Various techniques for improving the adhesion between the catalyst layer and the porous layer have been disclosed. Patent Document 1, for example, proposes a production method of a gas diffusion electrode substrate wherein proportion of the water-repellant material is lower on the surface by conducting a heat treatment using a heating method wherein temperature of the surface of the porous layer is lower than the melting point of the water-repellant material.

Patent Document 2 proposes a gas diffusion electrode substrate wherein an additive for facilitating the decomposition of the dispersant is added to the porous layer for reducing the time of heating.

Patent Document 3 proposes a production method of a gas diffusion electrode substrate for producing the gas diffusion electrode substrate in safe and efficient manner, and this method comprises the steps of first heating step for thermally decomposing the dispersant and a step wherein the heating is conducted at a temperature not lower than the melting point of the water-repellant material.

### [Prior Art Documents]

### [Patent Documents]

[Patent Document 1] Japanese Unexamined Patent Publication (Kokai) No. 2014-11108
[Patent Document 2] Japanese Unexamined Patent Publication (Kokai) No. 2016-225271
[Patent Document 3] Japanese Unexamined Patent Publication (Kokai) No. 2015-185217

### [Summary of the Invention]

### [Problems to Be Solved by the Invention]

However, in the invention of Patent Document 1, the time required for the decomposition of the dispersion material is too long since the surface temperature of the porous layer should be lower than the melting point of the water-repellant material, and efficient production of the gas diffusion electrode substrate having the adhesive properties is difficult. Use of the invention described in Patent Document 2 also suffers from the problem similar to the use of Patent Document 1 with the additional problem of increased cost. The invention described in Patent Document 3 has no description for the production method of the gas diffusion electrode substrate having the adhesive properties.

Accordingly, an object of the present invention is, in view of the prior art technologies, to provide a method for efficiently producing a gas diffusion electrode substrate having excellent adhesion properties, whose production has been difficult.

Another object of the present invention is to provide a fuel cell containing the gas diffusion electrode substrate produced by the method as described above.

### [Means for Solving the Problems]

The method for producing the gas diffusion electrode substrate of the present invention for solving the problems as described above is as described below.

A method for producing a gas diffusion electrode substrate having a porous layer on at least one surface of an electroconductive porous substrate comprising the steps of
a coating step wherein a coating solution containing electroconductive particles, a water-repellant material, a dispersion medium, and a surfactant is coated on the electroconductive porous substrate,
a drying step wherein the coated electroconductive porous substrate is heated at a temperature lower than the temperature of first heat treatment step,
the first heat treatment step wherein the heating is conducted at a temperature lower than the melting point of the water-repellant material, and
a second heat treatment step wherein the heating is conducted at a temperature higher than the melting point of the water-repellant material, wherein
the coating solution contains at least 0.09 part by weight and up to 0.27 part by weight of the water-repellant material in relation to 1 part by weight of the electroconductive particles,
the first heat treatment step is conducted by heating for a time of 0.2 minute to 3.0 minutes, and
the second heat treatment step is conducted by heating for a time of up to 2.9 minute.
The fuel cell of the present invention is prepared by using the gas diffusion electrode substrate prepared by using the method as described above.

### [Advantageous Effect of the Invention]

According to the embodiments of the present invention, this invention provides a method for efficiently producing a gas diffusion electrode substrate having excellent adhesion properties, whose production has been difficult.

### [Brief Description of the Drawing]

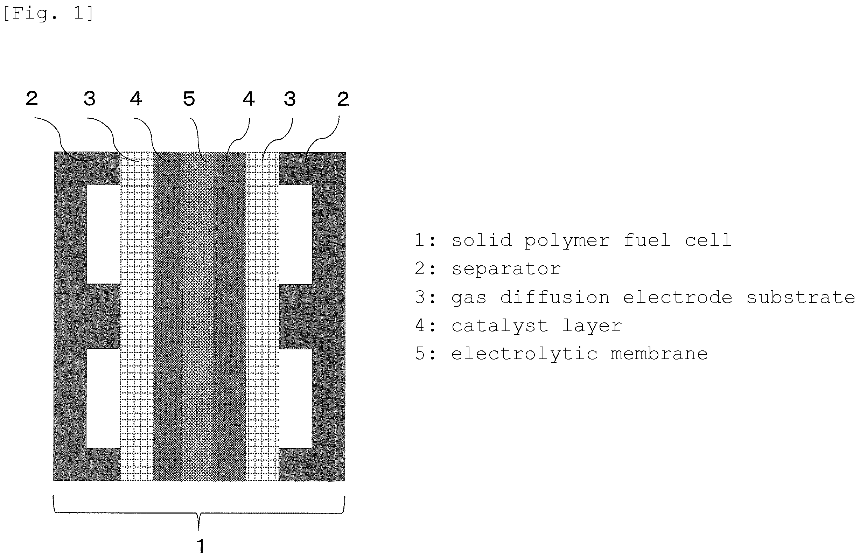

[FIG. 1] FIG. 1 is a cross sectional view showing an embodiment of the fuel cell.

### [Description of Preferred Embodiments]

The present invention provides an method for producing a gas diffusion electrode substrate having a porous layer on at least one surface of an electroconductive porous substrate comprising the steps of a coating step wherein a coating solution containing electroconductive particles, a water-repellant material, a dispersion medium, and a surfactant is coated on the electroconductive porous substrate, a drying step wherein the coated electroconductive porous substrate is heated at a temperature lower than the temperature of first heat treatment step, the first heat treatment step wherein the heating is conducted at a temperature lower than the melting point of the water-repellant material, and a second heat treatment step wherein the heating is conducted at a temperature higher than the melting point of the water-repellant material, wherein the coating solution contains at least 0.09 part by weight and up to 0.27 part by weight of the water-repellant material in relation to 1 part by weight of the electroconductive particles, the first heat treatment step is conducted by heating for a time of 0.2 minute to 3.0 minutes, and the second heat treatment step is conducted by heating for a time of up to 2.9 minute.

Next, the method for producing a gas diffusion electrode substrate according to the present invention is described in detail.

### [Electroconductive porous substrate]

Since it is important that the gas diffusion electrode substrate is a porous structure having a high electroconductivity, the electroconductive porous substrate used in the production method of the present invention is an electroconductive porous substrate composed of a substrate having a porous structure. Such electroconductive porous substrate is preferably a porous structure having an average pore diameter of at least 10 µm and up to 100 µm. Exemplary such electroconductive porous substrates include a carbon fiber-containing porous substrates such as carbon fiber paper structure, carbon felt, carbon paper, and carbon cloth and metal porous substrates such as foamed sintered metal, metal mesh, expanded metal. Of these, use of a porous substrate containing carbon fibers such as carbon felt, carbon paper, and carbon cloth is preferable in view of their improved corrosion resistance, and furthermore, use of a substrate prepared by bonding carbon fiber paper structures with a carbide, namely, a carbon paper is preferable in view of the excellent property of absorbing size change in the thickness direction of the electrolyte membrane, namely, the excellent "springiness".

In the present invention, the electroconductive porous substrate may be optionally rendered water-repellent by using a water-repellant material as will be described below in order to improve drainage property. The water-repelling treatment may be accomplished by coating the electroconductive porous substrate with a water-repellant material and subjecting the coated substrate to a heat treatment.

Amount of the water-repellant material coated in the water-repelling treatment is preferably 1 to 50 parts by weight and more preferably 2 to 40 parts by weight in relation to 100 parts by weight of the electroconductive porous substrate. When the amount of the water-repellant material coated is at least 1 part by weight in relation to 100 parts by weight of the electroconductive porous substrate, the resulting electroconductive porous substrate will exhibit excellent drainage property. On the other hand, when the amount of the water-repellant material coated is up to 50 parts by weight in relation to 100 parts by weight of the electroconductive porous substrate, the electroconductive porous substrate will have excellent electroconductivity.

### <Coating step>

The gas diffusion electrode substrate produced in the present invention has a porous layer on at least one surface of the electroconductive porous substrate.

The production method of the present invention includes the coating step wherein a coating solution containing electroconductive particles, a water-repellant material, a dispersion medium, and a surfactant is coated on an electroconductive porous substrate. The "porous layer" in the present invention is the layer formed by the coating step, the drying step, the first heat treatment step, and the second heat treatment step, which is a layer containing the electroconductive particles and the water-repellant material.

The electroconductive particles included in the coating solution and the porous layer are a carbon powder. Exemplary carbon powders include carbon blacks such as furnace black, acetylene black, lampblack, and thermal black, graphites such as vein graphite, flake graphite, amorphous graphite, artificial graphite, swollen graphite, and thin slice graphite, and carbon nanotube, linear carbon, and milled fibers of carbon fiber. Of these, the preferred are carbon black, and the most preferred is acetylene black in view of the low content of impurities.

In the present invention, the water-repellant material in the coating solution and the porous layer is a fluoropolymer. This water-repellant material is incorporated to improve water drainage property of porous layer. The water-repellant material is not particularly limited as long as it is a fluoropolymer, and the examples include fluoropolymers such as polytetrafluoroethylene (PTFE), tetrafluoroethylene - hexafluoropropylene copolymer (FEP), perfluoroalkoxy fluororesin (FEP), ethylene - tetrafluoroethylene copolymer (ETFA), polyfluorovinylidene (PVDF), and polyfluoro vinyl (PVF). In view of the particularly high water repellency, the preferred are PTFE or FEP, and the more preferred is PTFE in view of its high melting point that enables use of a higher temperature in the first heat treatment step to facilitate the surfactant decomposition. The water-repellant material may be used alone or in combination of two or more. When the water-repellant material is used in combination of two or more, adjustment of the drainage property and adhesion property to the desired range is facilitated.

The dispersion medium in the coating solution is a liquid used for dispersing the electroconductive particles and the water-repellant material. The dispersion medium is not particularly limited as long as it is a liquid which can be used in the of dispersion of the electroconductive particles and the water-repellant material, and the preferred are water and alcohols.

The surfactant in the coating solution is a chemical species having a moiety which has affinity for the electroconductive particles and a moiety which has affinity for the dispersion medium, and the surfactant in the coating solution is used for dispersing the electroconductive particles and the water-repellant material in the dispersion medium. The moiety having the affinity for the electroconductive particles is a hydrophobic chemical structure which can undergo an interaction with the electroconductive particles, for example, a phenyl group and an alkyl group. The moiety having the affinity for the dispersion medium is a hydrophilic chemical structure which can undergo an interaction with the dispersion medium such as water and alcohol, for example, ester bond, ether bond, amino group, hydroxy group, and carboxyl group. While the surfactant is not particularly limited as long as it is a chemical species having a moiety which has affinity for the electroconductive particles and a moiety which has affinity for the dispersion medium, the surfactant is preferably a nonionic surfactant having a low metal ion content. In view of this, the preferred are methyl cellulose ether and polyethylene glycol ethers, in particular, an ether of an alkylphenol and polyethylene glycol (for example, polyoxyethylene alkylphenyl ether), an ether of a higher aliphatic alcohol and polyethylene glycol, and a polyvinyl alcohol ether.

If desired, a thickener may be added to the coating solution in order to maintain the high viscosity of the coating solution to thereby improve coating property of the coating solution to the electroconductive porous substrate. Exemplary thickeners used may be any of the commonly known thickeners, and preferable examples include methylcellulose thickeners, polyethylene glycol thickeners, and polyvinyl alcohol thickeners.

The method used for maintaining the high viscosity of the coating solution is not limited to the process of using the thickener, and it is also preferable to use a surfactant having a thickening function for the surfactant as described above.

The coating solution used in the coating step of the production method of the present invention contains at least 0.09 part by weight and up to 0.27 part by weight of the water-repellant material in relation to 1 part by weight of the electroconductive particles in the coating solution. When the amount of the water-repellant material in the coating solution is at least 0.09 part by weight in relation to 1 part by weight of the electroconductive particles, peeling in the porous layer can be suppressed against the peeling stress by the swelling and shrinking of the electrolytic membrane after the adhesion of the porous layer with the catalyst layer. In the meanwhile, when the amount of the water-repellant material in the coating solution is up to 0.27 part by weight in relation to 1 part by weight of the electroconductive particles, the surface adhering with the catalyst layer will be maintained after the melting of the water-repellant material by the second heat treatment step as will be described below, and good adhesion of the catalyst layer to the porous layer will be realized. The amount of the water-repellant material in the coating solution is preferably at least 0.11 part by weight and more preferably at least 0.13 part by weight in relation to 1 part by weight of the electroconductive particles. The amount of the water-repellant material in the coating solution is also preferably up to 0.25 part by weight and more preferably up to 0.21 part by weight.

Amount of the electroconductive particles in the coating solution used in the coating step of the production method of the present invention is preferably at least 5% by weight and more preferably at least 10% by weight in relation to 100% by weight of the entire coating solution in view of the productivity. While there is no upper limit for the concentration of the electroconductive particles as long as the viscosity of the coating solution, the dispersion stability of the electroconductive particles, the coating properties of the coating solution are adequate, the upper limit is preferably up to 50% by weight in view of suppressing rapid increase in the viscosity by re-aggregation of the electroconductive particles and realizing the good coating properties of the coating solution.

The surfactant in the coating solution used in the coating step in the production method of the present invention preferably constitute at least 0.1 part by weight in relation to 100 parts by weight of the electroconductive particles for the dispersion of the electroconductive particles. However, increase in the amount of the surfactant is effective for the long-term stabilization of the dispersion to thereby prevent increase in the viscosity of the coating solution and prevent the separation of the coating solution. In such point of view, amount of the surfactant in the coating solution is more preferably at least 50 parts by weight, still more preferably at least 100 parts by weight, and most preferably at least 200 parts by weight in relation to 100 parts by weight of the electroconductive particles . Upper limit in the amount of the surfactant added is preferably up to 500 parts by weight in relation to 100 parts by weight of the electroconductive particles in view of preventing generation in a large amount of the steam or the decomposition gas in the subsequent heating steps and resulting loss of productivity.

In the coating step, the coating of the coating solution to the electroconductive porous substrate may be accomplished by using any of the commercially available coaters. Exemplary coting methods used include screen printing, rotary screen printing, spraying, intaglio printing, gravure printing, coating with a die coater, bar coating, and blade coating, and the preferred is the coating using a die coater since the amount coated can be standardized irrespective of the surface roughness of the electroconductive porous substrate. The coating methods indicated are exemplary methods, and the method used for the coating is not limited to those as described above.

Thickness of the porous layer of the present invention is preferably at least 10 µm (dry thickness) in view of the coarseness of the current electroconductive porous substrate, and the thickness is preferably up to 60 µm since excessive thickness may invite increase in the electric resistance of the gas diffusion electrode itself.

When the porous layer of the present invention has a thickness of at least 10 µm, viscosity of the coating solution in the coating is preferably kept to the range of at least 1000 m Pa·s. When the viscosity is lower than that, the coating solution will flow on the surface of the electroconductive porous substrate, and the coating solution may also flow into the pores, inviting breed through. On the contrary, the coating property will be inferior when the viscosity is too high, and accordingly, the upper limit of the viscosity of the coating solution is preferably approximately 25 Pa·s. The viscosity is more preferably in the range of at least 3000 m Pa·s and up to 20 Pa·s and still more preferably at least 5000 m Pa·s and up to 15 Pa·s.

The gas diffusion electrode substrate produced by the production method of the present invention has a porous layer on at least one surface of the electroconductive porous substrate. More specifically, the electroconductive porous substrate may have the porous layer only on one surface or on both surfaces. Accordingly, the coating solution may be coated either only on one surface or on both surfaces of the electroconductive porous substrate. When the coating solution is coated on both surfaces of the electroconductive porous substrate, the coating solution may be first coated on one surface of the electroconductive porous substrate, and then, the coating solution may be coated on the other surface either after the drying step as described below or without conducting the drying step.

### <Drying step>

In the common procedure, after the coating step, a coating solution-drying step is conducted to dry the coating solution at a temperature at which the surfactant will not be removed to thereby remove the dispersion medium (water in the case of an aqueous system) in the coating solution coated on the electroconductive porous substrate; and then, sintering is conducted for the purpose of removing the surfactant used in the dispersion of the electroconductive particles and temporarily melting the water-repellant material for the bonding of the electroconductive particles. However, in the present invention, after conducting the drying step wherein the coated electroconductive porous substrate is heated at a temperature lower than the temperature of the heating in the first heat treatment step, the first heat treatment step wherein the heating is conducted at a temperature lower than the melting point of the water-repellant material and the second heat treatment step wherein the heating is conducted at a temperature not lower than the melting point of the water-repellant material to promote melt bonding of the water-repellant material, namely, the so called sintering are separately conducted respectively at their optimal temperatures.

The drying step in the production method of the present invention is the step wherein the electroconductive porous substrate and the coating solution coated on the electroconductive porous substrate are heated to a temperature lower than the temperature heated in the first heat treatment step.

The temperature of the heating used in the drying step is preferably at least 80°C and up to 155°C. When the drying step is conducted by heating to a temperature of at least 80°C, efficient removal of the dispersion medium is enabled, and when the temperature is up to 155°C, damage in the quality by roughening of the porous layer surface by bumping of the dispersion medium will be suppressed. The time of heating in the drying step is preferably as short as possible in view of the productivity, and preferably, up to 10.0 minutes. On the other hand, use of excessively short time results in the insufficient removal of the dispersion medium, and hence, the dispersion medium may experience bumping due to the heating of the electroconductive porous substrate in the first heat treatment step or the second heat treatment step, and accordingly, the heating is preferably conducted for at least 0.05 minutes.

### <First heat treatment step>

The first heat treatment step of the present invention is the step conducted after the drying step, and in this step, the electroconductive porous substrate and the coating solution coated on the electroconductive porous substrate are heated at a temperature lower than the melting point of the water-repellant material. Since the heating in the first heat treatment step is conducted at a temperature lower than the melting point of the water-repellant material, the surfactant can be removed from the porous layer by heat decomposition when the temperature is optimized while suppressing the melting of the water-repellant material.

The heating in the first heat treatment step is preferably conducted at a temperature of at least 160°C and more preferably at least 250°C since the surfactant used in the coating solution can be removed.

The time of heating in the first heat treatment step is preferably as short as possible in view of the productivity, and the time is preferably up to 3.0 minutes. On the other hand, the surfactant is not sufficiently removed when the time of the heating is too short, and the time of heating in the first heat treatment step is preferably at least 0.2 minute.

### <Second heat treatment step>

The second heat treatment step of the present invention is the step conducted after the first heat treatment step, and in this step, the electroconductive porous substrate and the coating solution coated on the electroconductive porous substrate are heated to a temperature not lower the melting point of the water-repellant material. Since the temperature of the heating in the second heat treatment step is a temperature not lower than the melting point of water-repellant material, the water-repellant material will be melted, and the water-repellant material will be bonded to the electroconductive particles in the porous layer, and also, the water-repellant material will be mutually bonded. Accordingly, the peeling in the porous layer can be effectively suppressed against the peeling stress generated by the swelling and shrinking of the electrolytic membrane after the adhesion.

The heating in the second heat treatment step is preferably conducted at a temperature of at least 300°C and more preferably at least 330°C while the temperature may vary depending on the properties of the water-repellant material in the coating solution. However, decomposition of the water-repellant material by heat is undesirable, and the heat treatment is preferably conducted at a temperature not higher than the decomposition temperature of the water-repellant material, and accordingly, the heating in the second heat treatment step is preferably conducted at a temperature of up to 400°C.

The time of the heating in the second heat treatment step is up to 2. 9 minutes since the water-repellant material is melted and the surface adhered to the catalyst layer is gradually covered by the melted water-repellant material. Use of a shorter time for the time of heating in the second heat treatment step is preferable in view of the productivity, and for realizing a higher adhesive strength, use of such shorter time should be combined with an adequate heating temperature.

The second heat treatment step is preferably conducted by heating to a temperature of at least 330°C and up to 364°C for a time of at least 0.2 minute and up to 2.7 minutes in view of producing the gas diffusion electrode substrate in a short period.

It is also preferable to conduct the second heat treatment step by heating to a temperature of at least 365°C for a time of at least 0.2 minute and up to 1.5 minutes in view of efficient production of the gas diffusion electrode substrate. When the temperature of heating is at least 365°C and the time of heating is at least 0.2 minute and up to 1.5 minutes in the second heat treatment step, the time of heating in the first heat treatment step is preferably at least 0.2 minute and up to 1.5 minutes. When the temperature of heating is at least 365°C and the time of heating is at least 0.2 minute and up to 1.5 minutes in the second heat treatment step, a particularly efficient production of the gas diffusion electrode substrate is possible since the surfactant can be sufficiently removed even if the time of heating is up to 1.5 minutes in the first heat treatment step. The time of heating of both the first and the second heat treatment steps is preferably at least 0.2 minute since peeling in the porous layer by the melting of the water-repellant material is not efficiently suppressed.

For the efficient production of the gas diffusion electrode substrate in the present invention, it is preferable that a wound long electroconductive porous substrate is unwound from the wound roll, and various treatments are consecutively and continuously conducted before re-winding the electroconductive porous substrate. In other words, the process includes the steps of unwinding wherein the electroconductive porous substrate is unwound from the wound roll of the long electroconductive porous substrate before the coating step and the step of winding the gas diffusion electrode substrate obtained by the second heat treatment step after the coating step, the drying step, the first heat treatment step, and the second heat treatment step. In the unwinding step, the electroconductive porous substrate is unwound from the wound roll of the long electroconductive porous substrate in the winder. If necessary, a water-repelling step of the electroconductive porous substrate is included between the unwinding step and the coating step. Also, if necessary, the gas diffusion electrode substrate obtained by the second heat treatment step may be cooled after the second heat treatment step and before the winding step. Also, the first heat treatment step and the second heat treatment step may be conducted by using the same heat treatment apparatus having two zones whose temperature can be independently controlled. The order of the first heat treatment step and the second heat treatment step may be conducted in reverse order. In the winding step, the gas diffusion electrode is continuously wound by a winder. In the winding, an intervening paper may be wound together to protect the coated surface. In addition, the edge part may be trimmed immediately before the winding, or the substrate may be slit at the width of the final product before the winding. Furthermore, the size of the treatment apparatus can be reduced if the winding is conducted in each stage, for example, by winding after the water-repelling treatment of the electroconductive porous substrate, winding after the coating and the drying, and winding after the heat treatment.

### [Membrane electrode assembly]

In the present invention, a membrane electrode assembly can be formed by assembling the gas diffusion electrode substrate on at least one surface of the solid polymer electrolyte membrane having a catalyst layer on both sides. When the porous layer of the gas diffusion electrode substrate is arranged on the side of the catalyst layer in this process, reverse diffusion of the generated water is facilitated, and contact area of the catalyst layer and the gas diffusion electrode substrate will be increased to reduce the contact electric resistance.

### [Fuel cell]

The fuel cell of the present invention includes the gas diffusion electrode substrate produced by the production method of the present invention. More specifically, the fuel cell is the one having the separator on opposite sides of the membrane electrode assembly as described above constituted by providing the separator on opposite sides of the membrane electrode assembly. A solid polymer fuel cell is typically constituted by laminating a plurality of such membrane electrode assembly sandwiched between the separators with an intervening gasket. The catalyst layer is constituted from a layer containing a solid polymer electrolyte and a catalyst-supporting carbon. The catalyst used is typically platinum, and in a fuel cell wherein a reformed gas containing carbon monoxide is supplied on the anode side, the catalyst used on the anode side is preferably platinum or ruthenium. The solid polymer electrolyte used is preferably a perfluoro sulfonic acid polymer material exhibiting high proton conductivity, oxidation resistance, and heat resistance. Such fuel cell unit and constitution of such fuel cell themselves are well known, and the gas diffusion electrode substrate produced by the production method of the present invention may be formed either on one side or on both sides of the anode and the cathode.

### [Examples]

Next, the present invention is described in further detail by referring to the Examples

### <Measurement of weight per unit area (g/m²)>

The weight per unit area of the electroconductive porous substrate and the gas diffusion electrode substrate was determined by dividing the weight of the sample of 10 cm x 10 cm by the area of the sample (0.01 m²). The weight per unit area of the porous layer was determined by subtracting the weight per unit area of the electroconductive porous substrate from the weight per unit area of the gas diffusion electrode substrate.

### <Measurement of thickness (µm)>

The electroconductive porous substrate and the gas diffusion electrode substrate were placed on a smooth platen, and difference in the height between the case wherein the analyte (the electroconductive porous substrate or the gas diffusion electrode substrate) was present and the case wherein the analyte was absent was measured with the pressure of 0.15 MPa applied. Samples were corrected at 10 different location, and average of the height measurement difference was used for the thickness. The thickness of the porous layer was determined by subtracting the thickness of the electroconductive porous substrate from the thickness of the gas diffusion electrode substrate.

### <Measurement of viscosity>

By using Bohlin rotational rheometer manufactured by Spectris Co., Ltd. at the viscosity measurement mode, a circular cone plate (40 mm in diameter inclined at 2°) was rotated. Stress was measured while increasing the rotation speed of the plate (while increasing the shear rate). The value of the viscosity at the shear rate of 0.17/second was used for the viscosity of the coating solution.

### <Measurement of adhesive strength of gas diffusion electrode substrate (N/cm²)>

Adhesive strength between the gas diffusion electrode substrate and the catalyst layer was measured by using "Autograph" (Registered Trademark) AGS-X manufactured by SHIMADZU CORPORATION in the tensile test mode. Of the upper and lower sample holder jigs attached to the tensile tester, double-sided adhesive tape (NICETACK (Registered Trademark) Common Type NW-20 manufactured by NICHIBAN Co., Ltd.) was adhered to sample-receiving surface (2.0 cm x 2.0 cm) of the lower sample holder jig. The gas diffusion electrode substrate cut out in the size of 2 cm x 2 cm was disposed on the integrated electrolyte membrane - catalyst layer (electrolyte membrane "GORE-SELECT" (Registered Trademark) manufactured by W.L. Gore & Associates having a catalyst layer "PRIMEA" (Registered Trademark) manufactured by W.L. Gore & Associates formed on opposite surface thereof) cut out in the size of 1.5 cm x 1.5 cm so that the catalyst layer was in contact with the porous layer, and hot pressing was conducted by applying a pressure of 1 MPa at 100°C. After adhering the double-sided adhesive tape cut out in a size of 1.5 cm x 1.5 cm to the part of the sample (the integrated electrolyte membrane - catalyst layer), the sample was placed on the sample holder jig attached to the lower side of the tensile tester. By using the tester in the compression mode, the other sample holder jig on the upper side was pressed down for 30 seconds at a surface pressure of 1 MPa. The tester was then used in the tensile tester mode, and the upper sample holder jig was raised at a speed of 0.5 mm/second. The maximum stress applied in this timing was measured 5 times, and the average divided by the area was calculated for use as the adhesive strength (N/cm²).

### (Example 1)

A 400 m roll of untreated carbon paper (TGP-R-060 manufactured by Toray Industries, Inc.) (an electroconductive porous substrate having a width of about 400 mm) was placed in an unwinder.

The untreated substrate was transported by driving rolls provided in the unwinding section, the winding section, and the coater section. More specifically, the treatment was conducted by using a water-repelling treatment apparatus having a stainless steel dipping tank in the coater section and filling the tank with a water-repellant material dispersion (PTFE dispersion (Polyflon D-210C manufactured by DAIKIN INDUSTRIES, Ltd.) diluted 5 times by purified water); transporting the untreated substrate through the dispersion; squeezing excessive liquid by using squeezing rolls; drying the substrate for 2 minutes by passing the substrate through a drier set at a temperature of 60°C; coating a porous layer coating solution on an electroconductive porous substrate which has been subjected to the water-repelling treatment by using a die coating apparatus; drying the moisture at 100°C; conducting the first heat treatment step for 2.4 minutes in a heat treatment furnace set at a temperature of 320°C; conducting the second heat treatment step for 2.4 minutes in a heat treatment furnace set at 340°C; and winding the substrate.

The porous layer coating solution was prepared as described below.

7.7 parts by weight of acetylene black ("DENKA BLACK" (Registered Trademark) manufactured by DENKI KAGAKU KOGYO KABUSHIKI KAISHA), 3.2 parts by weight of PTFE dispersion (Polyflon D-210C manufactured by DAIKIN INDUSTRIES, Ltd.; PTFE content, 60% by weight; melting point, 330°C), 14 parts by weight of a surfactant polyoxyethylene alkylphenyl ether ("TRITON" (Registered Trademark) X-100 manufactured by nacalai tesque; decomposition temperature, 200°C to 370°C), and 75.1 parts by weight of purified water were kneaded in a planetary mixer to prepare a coating solution. This coating solution had a viscosity of 9.5 Pa·s.

### (Example 2)

The procedure of Example 1 was repeated except that the porous layer coating solution was changed and prepared as described below to produce a gas diffusion electrode substrate.

7.7 parts by weight of acetylene black ("DENKA BLACK" (Registered Trademark) manufactured by DENKI KAGAKU KOGYO KABUSHIKI KAISHA), 1.2 parts by weight of PTFE dispersion (Polyflon D-210C manufactured by DAIKIN INDUSTRIES, Ltd.), 14 parts by weight of surfactant polyoxyethylene alkylphenyl ether ("TRITON" (Registered Trademark) X-100 manufactured by nacalai tesque; decomposition temperature, 200°C to 270°C), and 77.1 parts by weight purified water were kneaded in a planetary mixer to prepare a coating solution. This coating solution had a viscosity of 9.4 Pa·s.

### (Example 3)

The procedure of Example 1 was repeated except that the temperature and the time of the heating in the second heat treatment step were changed as shown in Table 1 to produce a gas diffusion electrode substrate.

### (Example 4)

The procedure of Example 1 was repeated except that the time of the heating in the first heat treatment step and the temperature and the time of the heating in the second heat treatment step were changed as shown in the Table to produce a gas diffusion electrode substrate.

### (Example 5)

The procedure of Example 1 was repeated except that the porous layer coating solution was changed and prepared as described below to produce a gas diffusion electrode substrate.

7.7 parts by weight of acetylene black ("DENKA BLACK" (Registered Trademark) manufactured by DENKI KAGAKU KOGYO KABUSHIKI KAISHA), 2.1 parts by weight of PTFE dispersion (Polyflon D-210C manufactured by DAIKIN INDUSTRIES, Ltd.), 14 parts by weight of surfactant polyoxyethylene alkylphenyl ether ("TRITON" (Registered Trademark) X-100 manufactured by nacalai tesque; decomposition temperature, 200°C to 270°C), and 76.2 parts by weight purified water were kneaded in a planetary mixer to prepare a coating solution. This coating solution had a viscosity of 9.0 Pa·s.

### (Example 6)

The procedure of Example 5 was repeated except that the temperature and the time of the heating in the second heat treatment step were changed as shown in the Table 1 to produce a gas diffusion electrode substrate.

### (Example 7)

The procedure of Example 6 was repeated except that the time of the heating in the first heat treatment step was changed as shown in Table 2 to produce a gas diffusion electrode substrate.

### (Example 8)

The procedure of Example 7 was repeated except that the time of the heating in the second heat treatment step was changed as shown in Table 2 to produce a gas diffusion electrode substrate.

### (Example 9)

The procedure of Example 7 was repeated except that the time of the heating in the first heat treatment step and the time of heating in the second heat treatment step were changed as shown in Table 2 to produce a gas diffusion electrode substrate.

### (Example 10)

The procedure of Example 7 was repeated except that the temperature and the time of the heating in the second heat treatment step were changed as shown in Table 2 to produce a gas diffusion electrode substrate.

### (Comparative Example 1)

The procedure of Example 1 was repeated except that the porous layer coating solution was changed and prepared as described below to produce a gas diffusion electrode substrate.

7.7 parts by weight of acetylene black ("DENKA BLACK" (Registered Trademark) manufactured by DENKI KAGAKU KOGYO KABUSHIKI KAISHA), 0.4 part by weight of PTFE dispersion (Polyflon D-210C manufactured by DAIKIN INDUSTRIES, Ltd.), 14 parts by weight of surfactant polyoxyethylene alkylphenyl ether ("TRITON" (Registered Trademark) X-100 manufactured by nacalai tesque; decomposition temperature, 200°C to 270°C), and 77.9 parts by weight purified water were kneaded in a planetary mixer to prepare a coating solution. This coating solution had a viscosity of 9.6 Pa·s.

### (Comparative Example 2)

The procedure of Example 5 was repeated except that the time of the heating in the second heat treatment step was changed as shown in Table 2 to produce a gas diffusion electrode substrate.

### (Comparative Example 3)

The procedure of Example 5 was repeated except that the temperature and the time of the heating in the second heat treatment step was changed as shown in Table 3 to produce a gas diffusion electrode substrate. The time of second heat treatment should be elongated for improving the adhesive strength, and efficient production of the gas diffusion electrode substrate having excellent adhesion was not possible.

### (Comparative Example 4)

The procedure of Example 5 was repeated except that the time of the heating in the first heat treatment step and the temperature and the time of the heating in the second heat treatment step were changed as shown in Table 3 to produce a gas diffusion electrode substrate.

### (Comparative Example 5)

The procedure of Example 5 was repeated except that the temperature of the heating in the second heat treatment step was changed as shown in Table 3 to produce a gas diffusion electrode substrate.

### (Comparative Example 6)

The procedure of Example 5 was repeated except that the porous layer coating solution was changed and prepared as described below to produce a gas diffusion electrode substrate.

7.7 parts by weight of acetylene black ("DENKA BLACK" (Registered Trademark) manufactured by DENKI KAGAKU KOGYO KABUSHIKI KAISHA), 2.3 parts by weight of FEP dispersion ("Neoflon" (Registered Trademark) FEP dispersion ND-110 having a FEP content of 54% by weight and a melting point of 240°C manufactured by DAIKIN INDUSTRIES, Ltd.), 14 parts by weight of surfactant polyoxyethylene alkylphenyl ether ("TRITON" (Registered Trademark) X-100 manufactured by nacalai tesque; decomposition temperature, 200°C to 270°C), and 76.0 parts by weight purified water were kneaded in a planetary mixer to prepare a coating solution. This coating solution had a viscosity of 9.8 Pa·s.

### (Comparative Example 7)

The procedure of Example 6 was repeated except that the porous layer coating solution was changed and prepared as described below and the time of heating in the second heat treatment step was changed as shown in Table 3 to produce a gas diffusion electrode substrate.

7.7 parts by weight of acetylene black ("DENKA BLACK" (Registered Trademark) manufactured by DENKI KAGAKU KOGYO KABUSHIKI KAISHA), 1.0 parts by weight of PTFE dispersion (Polyflon D-210C manufactured by DAIKIN INDUSTRIES, Ltd.), 14 parts by weight of surfactant polyoxyethylene alkylphenyl ether ("TRITON" (Registered Trademark) X-100 manufactured by nacalai tesque; decomposition temperature, 200°C to 270°C), and 77.3 parts by weight purified water were kneaded in a planetary mixer to prepare a coating solution. This coating solution had a viscosity of 9.0 Pa·s.

**[Table 1]**

| | | Ex. 1 | Ex. 2 | Ex. 3 | Ex. 4 | Ex. 5 | Ex. 6 |
|---|---|---|---|---|---|---|---|
| Water-repellant material | Type of the water-repellant material | PTFE | PTFE | PTFE | PTFE | PTFE | PTFE |
| | Melting point of the water-repellant material [°C] | 330 | 330 | 330 | 330 | 330 | 330 |
| | Amount of the water-repellant material in relation to 1 part by weight of the electro-conductive particles [part by weight] | 0.25 | 0.09 | 0.25 | 0.25 | 0.16 | 0.16 |
| First heat treatment step | Temperature [°C] | 320 | 320 | 320 | 320 | 320 | 320 |
| | Time [minute] | 2.4 | 2.4 | 2.4 | 3.0 | 2.4 | 2.4 |
| Second heat treatment step | Temperature [°C] | 340 | 340 | 362 | 330 | 340 | 380 |
| | Time [minute] | 2.4 | 2.4 | 2.8 | 2.8 | 2.9 | 1.0 |
| Porous layer | Weight per unit area [g/m²] | 15 | 15 | 15 | 15 | 15 | 15 |
| | Thickness [µm] | 30 | 30 | 30 | 30 | 30 | 30 |
| Adhesive strength | [N/cm²] | 0.6 | 0.4 | 0.5 | 0.5 | 0.8 | 1.0 |

**[Table 2]**

| | | Ex. 7 | Ex. 8 | Ex. 9 | Ex. 10 | Comp. Ex. 1 | Comp. Ex. 2 |
|---|---|---|---|---|---|---|---|
| Water-repellant material | Type of the water-repellant material | PTFE | PTFE | PTFE | PTFE | PTFE | PTFE |
| | Melting point of the water-repellant material [°C] | 330 | 330 | 330 | 330 | 330 | 330 |
| | Amount of the water-repellant material in relation to 1 part by weight of the electro-conductive particles [part by weight] | 0.16 | 0.16 | 0.16 | 0.16 | 0.03 | 0.16 |
| First heat treatment step | Temperature [°C] | 320 | 320 | 320 | 320 | 320 | 320 |
| | Time [minute] | 1.0 | 1.0 | 0.6 | 1.0 | 2.4 | 2.4 |
| Second heat treatment step | Temperature [°C] | 380 | 380 | 380 | 367 | 340 | 380 |
| | Time [minute] | 1.0 | 0.3 | 0.6 | 1.5 | 2.4 | 3.1 |
| Porous layer | Weight per unit area [g/m²] | 15 | 15 | 15 | 15 | 15 | 15 |
| | Thickness [µm] | 30 | 30 | 30 | 30 | 30 | 30 |
| Adhesive strength | [N/cm²] | 0.7 | 0.8 | 1.0 | 0.5 | 0.2 | 0.3 |

**[Table 3]**

| | | Comp. Ex. 3 | Comp. Ex. 4 | Comp. Ex. 5 | Comp. Ex. 6 | Comp. Ex. 7 |
|---|---|---|---|---|---|---|
| Water-repellant material | Type of the water-repellant material | PTFE | PTFE | PTFE | FEP | PTFE |
| | Melting point of the water-repellant material [°C] | 330 | 330 | 330 | 240 | 330 |
| | Amount of the water-repellant material in relation to 1 part by weight of the electro-conductive particles [part by weight] | 0.16 | 0.16 | 0.16 | 0.16 | 0.08 |
| First heat treatment step | Temperature [°C] | 320 | 320 | 320 | 320 | 320 |
| | Time [minute] | 2.4 | 3.0 | 2.4 | 2.4 | 2.4 |
| Second heat treatment step | Temperature [°C] | 320 | 325 | 340 | 340 | 380 |
| | Time [minute] | 12.6 | 2.9 | 3.0 | 2.9 | 2.4 |
| Porous layer | Weight per unit area [g/m²] | 15 | 15 | 15 | 15 | 15 |
| | Thickness [µm] | 30 | 30 | 30 | 30 | 30 |
| Adhesive strength | [N/cm²] | 0.5 | 0.3 | 0.3 | 0.2 | 0.3 |

### [Explanation of Numerals]

- 1: solid polymer fuel cell
- 2: separator
- 3: gas diffusion electrode substrate
- 4: catalyst layer
- 5: electrolyte layer

## Claims

1. A method for producing a gas diffusion electrode substrate having a porous layer on at least one surface of an electroconductive porous substrate comprising the steps of
a coating step wherein a coating solution containing electroconductive particles, a water-repellant material, a dispersion medium, and a surfactant is coated on the electroconductive porous substrate,
a drying step wherein the coated electroconductive porous substrate is heated at a temperature lower than the temperature of first heat treatment step,
the first heat treatment step wherein the heating is conducted at a temperature lower than the melting point of the water-repellant material, and
a second heat treatment step wherein the heating is conducted at a temperature higher than the melting point of the water-repellant material, wherein
the coating solution contains at least 0.09 part by weight and up to 0.27 part by weight of the water-repellant material in relation to 1 part by weight of the electroconductive particles,
the first heat treatment step is conducted by heating for a time of 0.2 minute to 3.0 minutes, and
the second heat treatment step is conducted by heating for a time of up to 2.9 minute.

2. A method for producing gas diffusion electrode substrate according to claim 1 wherein the second heat treatment step is conducted by heating to a temperature of at least 330°C and up to 364°C for a time of at least 0.2 minute and up to 2.7 minutes.

3. A method for producing gas diffusion electrode substrate according to claim 1 wherein the first heat treatment step is conducted by heating for a time of at least 0.2 minute and up to 1.5 minutes, and
the second heat treatment step is conducted by heating to a temperature of at least 365°C for a time of at least 0.2 minute and up to 1.5 minutes,

4. A method for producing gas diffusion electrode substrate according to any one of claims 1 to 3 wherein the water-repellant material is polytetrafluoroethylene (PTFE).

5. A fuel cell prepared by using the gas diffusion electrode substrate prepared by using the method according to any one of claims 1 to 3.
